# EUROPEAN PATENT APPLICATION

(11) **EP 1 580 699 A1**
(43) Date of publication of application: **28.09.2005**
(21) Application number: 05251877.6
(22) Date of filing: 24.03.2005
(51) Int. Cl.: G07F 17/26, G07B 1/00, G06F 17/60

(54) **Memorial print issuance system**

(30) Priority: 26.03.2004 JP 2004093493
(71) Applicant: FUJI PHOTO FILM CO., LTD., Kanagawa (JP)
(72) Inventor: Kawaoka, Yoshiki, c/o Fuji Photo Film Co., Ltd., Asaka-shi, Saitama (JP); Kawabata, Yasutoshi c/o Fuji Photo Film Co., Ltd., Asaka-shi, Saitama (JP); Hosono, Yasuyuki, c/o Fuji Photo Film Co., Ltd., Asaka-shi, Saitama (JP)
(74) Representative: Stevens, Jason Paul

(57) **Abstract**

A user makes an order to use a service, and user order information accepted from the user is acquired, via a magnetic card reader 30 or via a network 92 and 94. A facial image of the user is inputted from a camera 50. Furthermore, based on the user order information, service provision information determined by the provider of the service related to the user order information is acquired from a service management server 82. By combining the user order information (departure and destination places, flight, class and the like), the facial image of the user and the service provision information (information about an fuselage to be used, crewmembers and the like) acquired from the service management server 82, a memorial print data is generated and printed on a predetermined print medium to be retained by the user even after use of the service by printers 70.

## Description

The present invention relates to a memorial print issuance system, and in particular to a memorial print issuance system that issues a memorial print with a facial portrait thereon for commemoration of use of a service by a user.

When using a vehicle, a user generally purchases a ticket to use the vehicle. After the user uses the vehicle, the whole of such a ticket is returned to the operator, or a part of the ticket is left for the user as a so-called "ticket stub".

For example, when a user is going to use an airplane, he or she obtains a boarding card at a predetermined check-in counter. On the boarding card, there are written the name of the user, a boarding date, a flight name, a class, a departure place, a destination place and the like in accordance with the order of the user. The boarding card is divided into two when the user gets on board the airplane. One of them is collected to be kept by the carrier operating the airplane, and the other is returned to the user as a "ticket stub". The two portions divided from the boarding card serve as an evidence matter proving when, which flight, at what class and who got on board to move from which place to which place. The portion collected for the carrier is kept by the carrier for a predetermined period of time. The "ticket stub", the portion for the user, is generally thrown out after he or she gets off board because it is of no more use to the user, or thrown out after it has become unnecessary to serve as an evidence matter proving boarding results to acquire so-called mileage points.

In Japanese Patent Application Laid Open No. 2003-182273, a technique is described in which a facial image of a user is printed on a boarding card for the purpose of enabling confirmation of identification of a passenger to get on board to be performed in a short time. Since the facial image of a user is printed on a boarding card, it is possible to perform simple security check about whether or not the user is a valid passenger without requesting presentation of an identification card from the user. The half of the boarding card, on which the facial image is printed, is collected to be kept by the carrier as an evidence, and the other half, on which the facial image is not printed, is "returned" to the user.

In Japanese Patent Application Laid Open No. 2000-216989, a technique is described, for the purpose of enabling confirmation of a person to which a print is to be given at a wedding party, in which participant-related information (names of participants, the name of the venue of a wedding party, names of the bridal couple, a date, a message by the bridal couple, and the like) included in a participants file created in advance on a predetermined recording medium is acquired based on an inputted seat code for a user and is printed with an image of the participant taken at the wedding party.

In Japanese Patent Application Laid Open No. 2002-32792, a technique is described in which customers are registered with a railroad company in advance, a customer number is assigned to each customer, and each customer performs reservation or makes change about items required for a travel, such as a ticket for a train, travel goods, meals during the travel and souvenirs, based on the assigned customer number.

In Japanese Patent Application Laid Open No. 2003-6683, a technique is described in which, when reserving a ticket, a customer inputs the card number of his IC card with his communication terminal, and then a reservation acceptance server stores information about the ticket reservation and the card number in association with each other, and when a customer actually goes to a station to purchase the ticket, he or she causes the card number of the IC card to be read by an automatic vending machine to obtain the reserved ticket.

On a boarding card of an airplane, there is described only minimum information that indicates when, which flight, at which class and who gets on board to move from which place to which place. Such a boarding card is generally insufficient as a commemorative object commemorating the fact that the user has used the airplane. That is, the ticket stub separated when a user gets on board an airplane does not attract the user to treasure it though it fulfills the function as an evidence matter proving that the user got on board the airplane, and eventually, it will be thrown out.

In addition, in the case of a ticket purchased to use a vehicle such as a ship, a railroad car and a bus, the whole ticket is collected without anything left to a user, or only a part of the ticket is left for the user similarly to the case of the airplane boarding card and only fulfills the function as an evidence matter proving that the user used the vehicle.

The technique described in Japanese Patent Application Laid Open No. 2003-182273 relates to printing an image of a user for the purpose of confirmation of identification of passengers to get on board, and therefore, the image of a user is printed on a portion to be collected and cannot satisfy the user who wants to keep it as a commemorative object.

The main object of the technique described in Japanese Patent Application Laid Open No. 2000-216989 is, for the purpose of confirmation of a person to whom a print is to be given at a wedding party, to retrieve a name of a participant based on a seat code and print it together with an image of the participant. The technique does not relate to content of a service as ordered by a user and provided in response to the order in the case of services such as operation of a vehicle, performance of a concert or a play, or provision of facilities such as a hotel. That is, though it is possible to surely confirm a person to whom a print is to be given at a wedding party by printing names of participants and to remind the participants of the bridal couple after the wedding party by printing the content determined by the bridal couple in advance, such as the name of a wedding hall, the date and a message from the bridal couple, it is impossible for a user to order a chosen service and to remind the user of the service provided in accordance with the order.

However, a user who chooses to use a vehicle desires to have a memory of using the vehicle. For example, the user may have a desire to have something commemorative in order to keep a memory of getting on board an airplane for the first time, getting on board on an airplane during a memorable travel, getting on board on a topical airplane, and the like.

Meanwhile, a carrier operating airplanes desires to satisfy a user who uses its airplane and wants him or her to use its airplane again.

The present invention has been made in consideration of the above situation, and its object is to provide a memorial print issuance system capable of giving a user who uses a service a print which commemorates a fact that the user uses the service to give him or her a feeling of satisfaction.

To achieve the above object, a first aspect of the present invention is configured to comprise: a user order information acquisition device that acquires user order information accepted from a user who has made an order of use of a service; a user image input device in which a facial image of the user is inputted; a service provision information acquisition device that acquires from a predetermined server via a network, service provision information related to the user order information, which is determined by the service provider side, based on the user order information; a print data generation device that generates memorial print data commemorating the use of the service for each user by combining the service provision information acquired from the server with the user order information and the facial image of the user; and a print device that prints the memorial print data on a predetermined print medium retainable by the user even after the use of the service.

According to this configuration, based on user order information which is actively determined by a user, service provision information related to the user order information, which is determined by the service provider side, is acquired from a server, and the acquired service provision information is combined with the user order information and a facial image of the user and printed on a print medium to be retained by the user even after use of the service. Thereby, it is possible for the user to remember the content of the service in accordance with his or her choice that he or she used, after the use of the service, and it is possible to give a satisfaction feeling to the user.

A second aspect of the present invention is configured to be the first aspect, further comprising a print pattern selection operation device that selects a print pattern for the service provision information to be printed on the print medium; wherein the service provision information acquisition device selectively acquires the service provision information corresponding to the selected print pattern from the server.

According to this configuration, it is possible to create a memorial print with a desired printed pattern selected by a user in his preference.

A third aspect of the present invention is configured to be the first or the second aspect, wherein the service is operation of an airplane, a ship, a railroad car, a bus or any other vehicle.

A fourth aspect of the present invention is configured to be the third aspect, wherein the service provision information includes at least any of personal information about crewmembers to attend when the user actually uses a vehicle and information about the vehicle which the user actually uses, and is printed on the print medium together with the user order information and the facial image of the user.

A fifth aspect of the present invention is configured to be the third aspect, wherein the service provision information includes at least any of images of crewmembers to attend when the user actually uses a vehicle and an image of the vehicle which the user actually uses, and is printed on the print medium together with the user order information and the facial image of the user.

According to this configuration, it is possible for a user to clearly remember a vehicle he or she used and crewmembers from an image.

In a sixth aspect of the present invention is configured to be the first or the second aspect, wherein the service is performance of a concert, play or the like or provision of facilities such as a hotel.

A seventh aspect of the present invention is configured to be any of first to sixth aspects, wherein the user image input device is a camera that takes an image of the user.

An eighth aspect of the present invention is configured to be any of first to seventh aspects, wherein the user order information acquisition device reads and acquires a part or all of the user order information from a ticket of the user on which predetermined information is recorded.

According to this configuration, it is possible to utilize a ticket on which proper information is recorded to issue a memorial print.

A ninth aspect of the present invention is configured to be any of first to seventh aspects, wherein the user order information acquisition device acquires a part or all of the user order information via a network.

According to the present invention, it is possible to give a user who uses a service a print to be a memorial of using the service and thereby give a feeling of satisfaction to the user.

Preferred embodiments of the present invention will be described below by way of example only and with reference to the accompanying drawings, in which:
Fig. 1 is an entire block diagram showing the outline of an example of a service system to which the present invention is applied;
Fig. 2 is a block diagram showing the internal configuration of a memorial print issuance apparatus;
Fig. 3 shows a first example of a memorial print;
Fig. 4 shows a second example of a memorial print;
Fig. 5 is a schematic flowchart showing a flow of a memorial print issuance process; and
Fig. 6 shows an example of a case where a ticket stub of a boarding card is to be a memorial print.

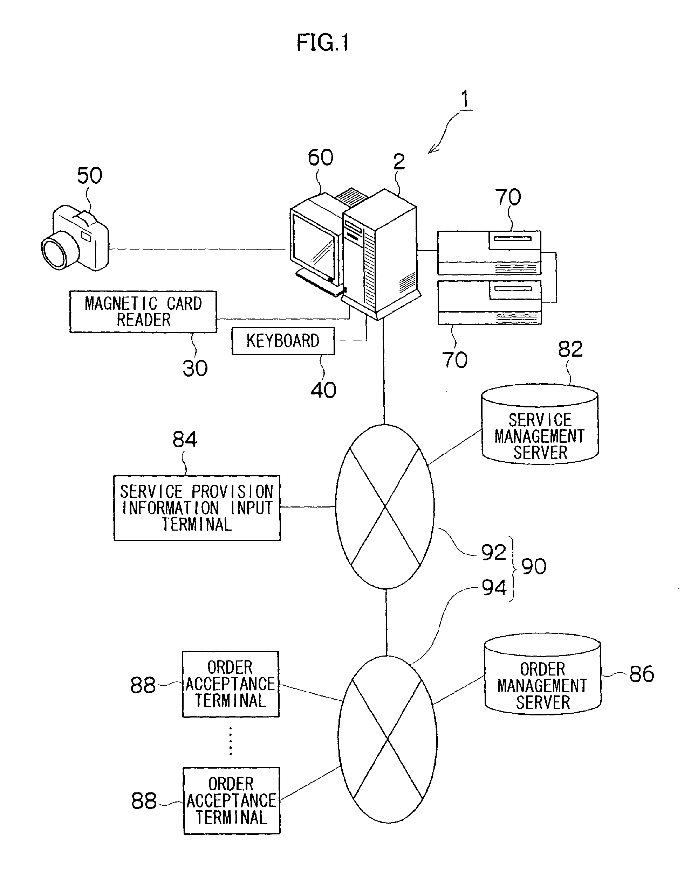

As mentioned above, Fig. 1 is an entire block diagram showing the outline of an example of a service system to which the present invention is applied. This service system is applied to a case of issuing a memorial print commemorating the use of a vehicle to a user who uses the vehicle.

In this case, the vehicle includes an airplane, a ship, a railroad car and a bus. Description will be made below on the assumption that the vehicle is an airplane for convenience of the description.

The service system shown in Fig. 1 is configured mainly by a controller 2, a magnetic card reader 30, a keyboard 40, a camera 50, a monitor 60, two printers 70, a service management server 82, a service provision information input terminal 84, an order management server 86, an order acceptance terminal 88 and a network 90 (92 and 94).

The controller 2 performs overall control of the magnetic card reader 30, the keyboard 40, the camera 50, the monitor 60 and the printers 70 and communicates with the service management server 82 and the order management server 86 via the network 90 (92 and 94) to perform a memorial print issuance process.

The magnetic card reader 30 reads from a boarding card of a passenger magnetic data recorded on the boarding card. On the boarding card, there is recorded boarding information about boarding on an airplane by the passenger as magnetic data. The boarding information includes user order information such as the name of the passenger, a boarding date, a flight name, a departure place, a destination place and a class, in accordance with an order made by the user.

The controller 2 is also capable of selectively acquiring only boarding information about the user concerned among boarding information about all users, from the order management server 86 via the networks 92 and 94.

Meanwhile, the controller 2 selectively acquires only service provision information related to the user order information about the user concerned among service provision information about all users involved in all airplane flights, from the service management server 82 via the network 92.

The keyboard 40 is used for inputting various information. When magnetic data cannot be read from a boarding card, or when a boarding card of a passenger is a type in which magnetic data is not recorded, it is also possible to input the boarding information from the keyboard 40.

The camera 50 takes an image of a passenger and inputs a facial image of the passenger into the controller 2.

The monitor 60 outputs information. For example, the monitor 60 displays boarding information inputted by the magnetic card reader 30 or the keyboard 40, a facial image of a passenger inputted by the camera 50, and service provision information acquired from the service management server 82.

The boarding information inputted by the magnetic card reader 30 or the keyboard 40, the facial image of a passenger inputted by the camera 50 and the service provision information acquired from the service management server 82 are combined by the controller 2 to generate memorial print data commemorating boarding of an airplane.

The printers 70 print the memorial print data generated by the controller 2 on a predetermined print medium. In the example shown in Fig. 1, the two printers 70 are daisy-chain connected with each other via a SCSI (small computer system interface).

In this embodiment, the controller 2, the magnetic card reader 30, the keyboard 40, the camera 50, the monitor 60 and the printers 70 constitute a memorial print issuance apparatus 1.

The service management server 82 manages service provision information to be provided to all users involved in all airplane flights. In this case, the service provision information includes fuselage information about all airplanes, crew information about all crewmembers (a captain, stewardesses, stewards and the like), information about all flights and other information about all services which can be provided. The fuselage information includes the model of a fuselage, the image of the fuselage, a flying range and the aggregate number of passengers. The crew information includes names of crewmembers and facial images of the crewmembers. The flight information includes a flight schedule (scheduled departure time, scheduled arrival time and the like) and flight results (results of the actual departure time, the actual arrival time and the like). The service provision information is inputted, for example, by the service provision information input terminal 84, registered to the service management server 82 and managed in association with one another.

The service management server 82 manages the service provision information for each flight. For example, by using a flight name, a destination place, a departure data or the like as a retrieval key, service provision information related to the retrieval key can be retrieved.

The order management server 86 can manage user order information about all users. The user order information includes a passenger name, a boarding date, a flight name, a departure place, a destination place and a class, and user order information about an order made by each user when a boarding card is reserved or immediately before the user gets on board is managed for each user. For example, user order information inputted at the order acceptance terminal 88, such as a communication terminal of a travel agent, a communication terminal of a carrier, and a personal computer or a mobile telephone of a user, is registered to the order management server 86 via the network 94.

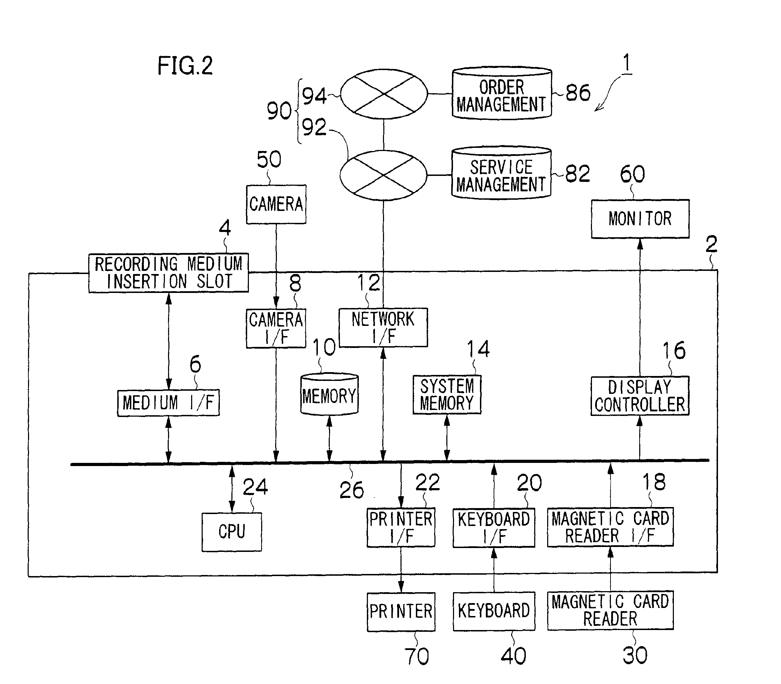

Fig. 2 is a schematic block diagram showing the internal configuration of the controller 2.

In Fig. 2, the controller 2 is configured mainly by a recording medium insertion slot 4 in which a recording medium such as a memory card is set, a medium interface 6 for acquiring an image recorded on a recording medium, a camera interface 8 for acquiring an image from the camera 50, a memory 10, a network interface 12 for communicating with the service management server 82 and the order management server 86 via the network 90, a system memory 14, a display controller 16 for displaying information on the monitor 60, a magnetic card reader interface 18 for acquiring information read by the magnetic card reader 30, a keyboard interface 20 for an operator at a check-in counter to input information with, a printer interface 22 for sending print data to the printers 70, a CPU (central processing unit) 24 for performing a memorial print issuance process by executing a predetermined program, and a system bus 26.

The aspect of connection between the camera 50 and the controller 2 is not especially limited. For example, they are connected via an IEEE1394 interface or a USB (universal serial bus), a wireless LAN or the like so that an image is given from the camera 50 to the controller 2. There is also an aspect in which an image is given from the camera 50 to the controller 2 via a recording medium instead of via communication.

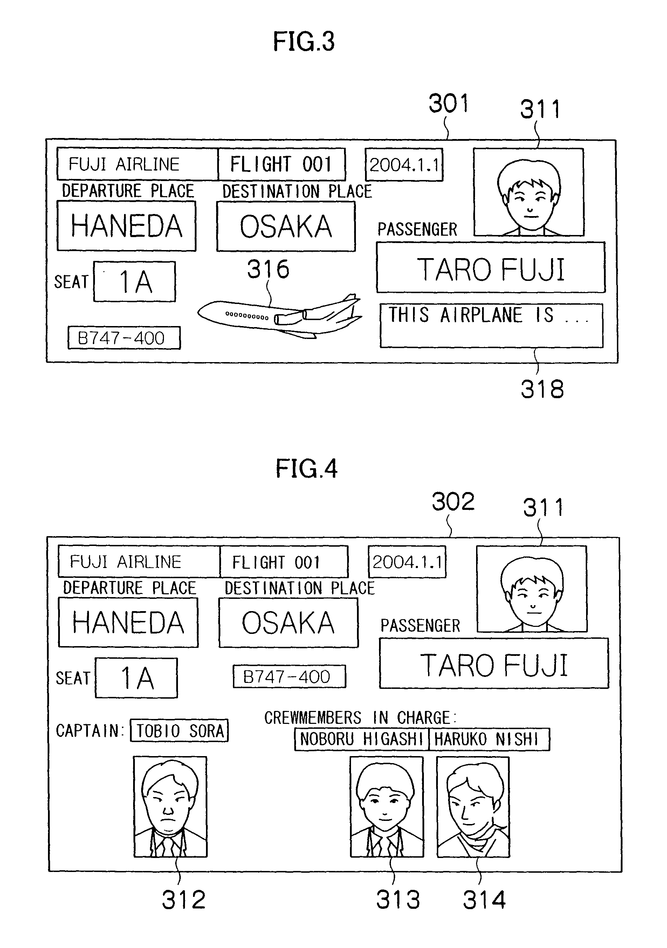

Fig. 3 shows an example of a first print pattern. On a memorial print 301 in the first print pattern, shown in Fig. 3, there are printed "Flight No. 001" of "Fuji Airline" as a flight name, "2004.1.1" as a boarding date, "Haneda" as a departure place, "Osaka" as a destination place, a passenger name and facial image 311, "1A" as a seat number, "B747-400" as a fuselage to be used, an image of the fuselage to be used 316 and description of the fuselage to be used (for example, description of the flying range) 318.

Fig. 4 shows an example of a second print pattern of a memorial print. On a memorial print 302 in the second print pattern, shown in Fig. 4, there are also printed a flight name, a boarding date, a departure place, a destination place, a passenger name, a facial image of the passenger, a seat number and "8747-400" as a fuselage to be used, similarly to the memorial print 310 in the first print pattern, shown in Fig. 3. Furthermore, in the second print pattern shown in Fig. 4, there are also printed "Tobio Sora" as the name of a captain, "Noboru Higashi" and "Haruko Nishi" as the names of crewmembers in charge, an image of the captain 312 and images of the crewmembers in charge 313 and 314.

Whether to create a memorial print in the first print pattern as shown in Fig. 3 or to create a memorial print in the second print pattern as shown in Fig. 4 can be selected by selection from a list of print layouts or print pattern identification information and the like with the use of the keyboard 40. The aspect of such print pattern selection includes an aspect in which a user performs a selection operation himself or herself and an aspect in which an operator performs a selection operation in accordance with what a user wants.

The CPU 24 in Fig. 2 selectively acquires from the service management server 82 user order information in accordance with the content of a user's order, and service provision information related to the user order information and corresponding to a selected print pattern, which is selected from among service provision information related to all airplane flights, determined by the carrier, based on the selected print pattern. For example, in the case of the first print pattern shown in Fig. 3, the fuselage to be used "B747-400", the image of the fuselage to be used 316 and the description of the fuselage to be used 318 are selected and acquired from the service management server 82 based on the flight name ("Flight No. 001" of "Fuji Airline") and the boarding date. Though the paint of the fuselage to be used may be changed, an image in the same condition as the condition on the date when the user gets on board is selected and acquired as the image of the fuselage to be used 316. For example, in the case of the second print pattern shown in Fig. 4, the name of a captain "Tobio Sora", the names of crewmembers in charge ("Noboru Higashi" and "Haruko Nishi"), the image of the captain 312 and the images of the crewmembers in charge 313 and 314 are selected and acquired from the service management server 82 based on the flight name ("Flight No. 001" of "Fuji Airline"), the boarding date, the departure place and the destination place. Though the captain and the crewmembers in charge may be changed just before flight, the names and images of the crewmembers who actually get on board the airplane the user gets on board are selected and acquired.

Meanwhile, the CPU 24 reads a template corresponding to a selected print pattern from the memory 10. By combining user order information and an image of a user with this template and further combining service provision information acquired based on the user order information and the print pattern with the template, print data is generated. Then, the generated print data is given to the printers 70 via the printer interface 22.

In Fig. 2, a user order information acquisition device of the present invention is configured mainly by the magnetic card reader 30, the keyboard 40 and the network interface 12. A user image input device of the present invention is configured mainly by the camera 50 and the system bus 26. A service provision information acquisition device of the present invention is configured mainly by the CPU 24 and the network interface 12. A print data generation device of the present invention is configured mainly by the CPU 24. A print device of the present invention is configured mainly by the printers 70. A print pattern selection operation device of the present invention is configured mainly by the keyboard 40 and the monitor 60.

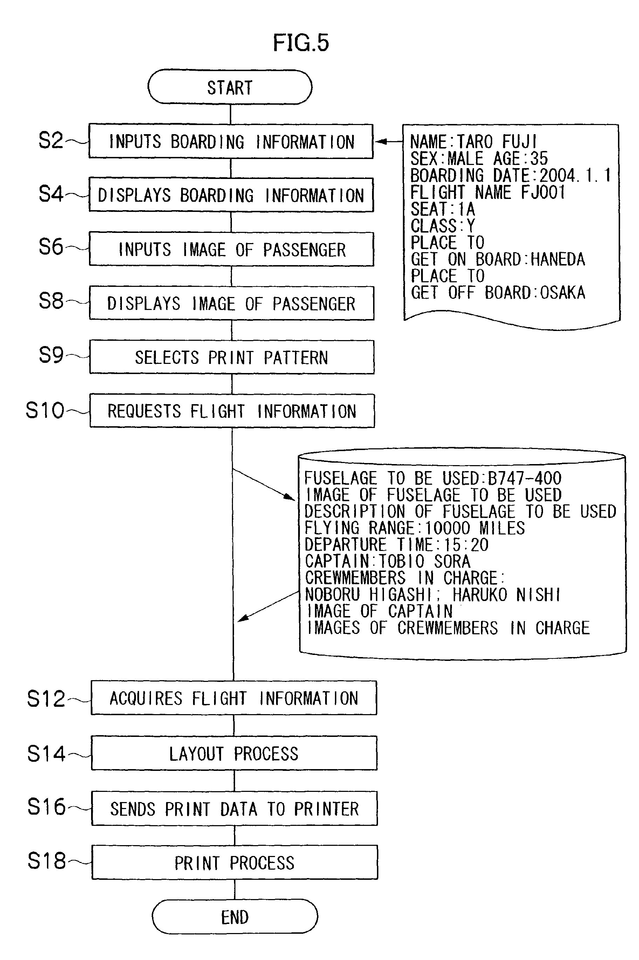

A flow of a memorial print issuance process in the memorial print issuance system of the present invention will be now described with reference to a flowchart in Fig. 5.

First, boarding information is inputted (S2). Specifically, boarding information recorded on a boarding card as magnetic data is read by the magnetic card reader 30 and sent to the controller 2. The boarding information includes user order information accepted from a user when the user made a reservation. The boarding information includes, for example, "Name: Taro Fuji", "Sex: Male", "Age: 35", "Boarding Date: 2004.1.1", "Flight Name: FJ001", "Class: Y", "Place to Get on Board (Departure Place): Haneda" and "Place to Get Off Board (Destination Place): Osaka". When the boarding information is not recorded on a boarding card as magnetic data, an operator inputs the flight name, the passenger name and the like with the keyboard 40 to acquire pre-registered information from the order management server 86 based on the flight name, the passenger name and the like. It is also possible for the operator to directly input missing boarding information or all the boarding information with the keyboard 40.

The inputted boarding information is displayed on the monitor 60 under the control of the controller 2 (S4). Here, the boarding information is confirmed by the operator or the passenger.

Next, a facial image of the passenger is inputted (S6). Specifically, a facial image acquired by the camera 50 is sent from the camera 50 to the controller 2.

The inputted facial image of the passenger is displayed on the monitor 60 (S8). Here, the facial image of the passenger is confirmed by the operator or the passenger.

Next, a print pattern is selected (S9). For example, whether to create a memorial print in the first print pattern as shown in Fig. 3 or to create a memorial print in the second print pattern as shown in Fig. 4 is selected.

Next, the user order information and the selected print pattern for the user is given to the service management server 82, and corresponding flight information (service provision information) is requested (S10).

Flight information is registered with the service management server 82, such as "Fuselage to Be Used: B747-400", an image of the fuselage to be used, description of the fuselage to be used, "flying range: 10000 miles", "Departure Time: 15:20", "Captain: Tobio Sora", "Crewmembers in charge: Noboru Higasi and Haruko Nishi", an image of the captain, images of the crewmembers in charge and the like, for each flight and in association with a flight schedule.

When the controller 2 receives from the service management server 82, based on the user order information and the print pattern, flight information related to the user order information and the printer pattern among flight information pre-registered with the service management server 82 (S12), it performs a memorial print layout process in the selected print pattern (S14). Here, by combining the user order information and the image of the user with a template corresponding to the selected print pattern and further combining the service provision information corresponding to the user order information and the print pattern with the template, the controller 2 generates print data commemorating the boarding of the user.

The generated memorial print data is given from the controller 2 to the printers 70 (S16) and printed on a predetermined print medium to issue a memorial print (S18).

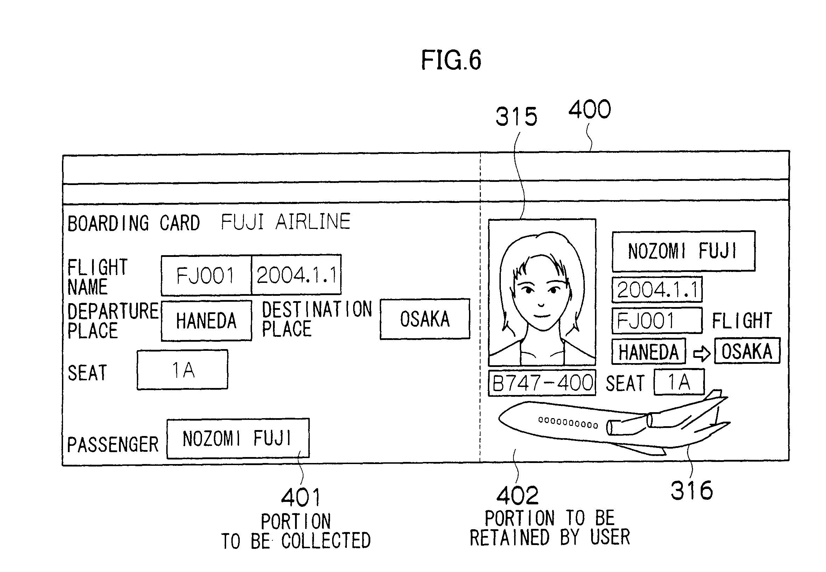

The present invention has been described with an example in which a memorial print is issued as a print medium separate from a boarding card with the use of Figs. 3 to 5. However, the present invention is not limited thereto. For example, a boarding card itself may be a memorial print as shown in Fig. 6.

In Fig. 6, a boarding card 400 consists of a portion to be collected 401 which is collected and kept by a carrier and a portion to be retained by a user 402 which is given to a user as a "ticket stub". The portion to be collected 401 and the portion to be retained by a user 402 are separated when the user gets on board an airplane.

On both of the portion to be collected 401 and the portion to be retained by a user 402, a flight name "FJ001", a boarding date "2004.1.1", a departure place "Haneda", a destination place "Osaka", a passenger name "Nozomi Fuji" and a seat number "1A" are printed by the memorial print issuance apparatus 1. Furthermore, on the portion to be retained by a user 402, which the user can continue retaining even after arriving at the destination place, an image of the passenger 315, the name of the fuselage to be used, "B747-400", the image of the fuselage to be used 316 are printed by the memorial print issuance apparatus 1. That is, the user can retain the "ticket stub" on which the name of the used fuselage and the image of the used airplane are printed even after the use of the airplane.

In this case, the airplane image 316 is an image showing the airplane that the user has actually got on board. For example, even when the fuselage of the airplane is re-painted at a predetermined time interval, an image obtained by photographing the airplane painted in the same condition as when the user gets on board is used. For example, when the user gets on board an airplane with a well-known animation character painted on the fuselage, an image obtained by photographing the airplane with the well-known animation character painted or a composite image showing the airplane with the well-known animation character painted thereon is used.

The present invention has been described with an example in which the memorial print issuance apparatus 1 is installed at a check-in counter, and a memorial print is issued and given to a user before the user gets on board an airplane. However, the present invention is not limited thereto. For example, the present invention may be applied to a case where a memorial print is issued after a user gets off an airplane. When a memorial print is issued after a user gets off an airplane, an image of the outside taken from inside the airplane may be printed. For example, in the case of a flight on a route via the airspace above Mt. Fuji, an image obtained by actually photographing Mt. Fuji from the airplane the user gets on may be printed.

A memorial print may be used not only for the purpose of commemorating boarding of a user but for the purpose of enabling crewmembers to provide a differentiated service for each user in an airplane. For example, in the case where a different service is provided for each customer, it is possible to print an icon for identifying each service on a memorial print and give the memorial print included in a transparent holder to the customer in a form that the customer can wear it around the neck. Thereby, the crewmembers can provide an in-flight service, with the identification icon on the memorial print put around the customer's neck as a mark. Similarly, the memorial print may be used for barrier-free purposes.

Though description has been made on specific examples of the case where a user gets on board an airplane, the present invention is not limited to the case of commemorating boarding of an airplane. It is also possible to apply the present invention to the case of getting on a ship, a railroad car or a bus and issue a memorial print.

Though the description has been made on a case where a service provided to a user is operation of a vehicle, the service to which the present invention is applicable is not limited thereto. The service may be, for example, performance of a concert, a play or the like. Furthermore, the service may be provision of facilities such as a hotel.

For example, when a user orders a concert ticket, user order information accepted from the user is acquired. The user order information includes information about on what day in what month, by which singer and at which concert hall the concert is performed, and who is the visitor, for example. Furthermore, a facial image of a user, who is the visitor, is inputted. As the facial image of the user, an image taken by the user's mobile telephone may be received from the mobile telephone via a network if the user orders a ticket using the mobile telephone. The facial image of the user may be directly taken at a ticket agency selling tickets or at a concert hall. Meanwhile, when a memorial print is created, service provision information determined by the concert organizer side is acquired from a predetermined service management server. The service provision information includes, in addition to a unique image of a singer taken for the concert, the names and images of band members (for a guitar, a bass, drums and the like) who actually perform at the concert, a unique image of the concert hall where the concert is held, main song titles to be actually performed at the concert, and the like. Such service provision information may not be announced until the concert begins or may be changed just before the concert. However, the service provision information at the point when the concert is actually started is acquired. The user operates a memorial print creation device installed at a hall and the like and selects which print pattern a memorial print is to be created in from among multiple print patterns. For example, the user selects whether to create a memorial print including the names and images of the band members in addition to those of the singer, create a memorial print including a unique image of the concert hall, or create a memorial print including a composite two-shot image showing the singer and the user. Service provision information corresponding to the user order information and the print pattern is acquired from a service management server. Then, the user order information and an image of the user are combined with a template corresponding to the print pattern, and the service provision information selected and acquired is combined with the template to generate a memorial print. A user can obtain a desired memorial print, and a service provider can give a satisfaction feeling to the user.

## Claims

1. A memorial print issuance system (1), **characterized by** comprising:
a user order information acquisition device (86) that acquires user order information accepted from a user who has made an order of use of a service;
a user image input device (50) in which a facial image of the user is inputted;
a service provision information acquisition device (2) that acquires from a predetermined server (82) via a network (90), service provision information related to the user order information, which is determined by the service provider side, based on the user order information;
a print data generation device (2) that generates memorial print data commemorating the use of the service for each user by combining the service provision information acquired from the server with the user order information and the facial image of the user; and
a print device (70) that prints the memorial print data on a predetermined print medium retainable by the user even after the use of the service.

2. The memorial print issuance system (1) according to claim 1, further comprising:
a print pattern selection operation device that selects a print pattern for the service provision information to be printed on the print medium; wherein
the service provision information acquisition device (2) selectively acquires the service provision information corresponding to the selected print pattern from the server (82).

3. The memorial print issuance system (1) according to claim 1 or 2, wherein the service is operation of an airplane, a ship, a railroad car, a bus or any other vehicle.

4. The memorial print issuance system (1) according to claim 3, wherein the service provision information includes at least any of personal information about crewmembers to attend when the user actually uses a vehicle and information about the vehicle which the user actually uses, and is printed on the print medium together with the user order information and the facial image of the user.

5. The memorial print issuance system (1) according to claim 3, wherein the service provision information includes at least any of images of crewmembers to attend when the user actually uses a vehicle and an image of the vehicle which the user actually uses, and is printed on the print medium together with the user order information and the facial image of the user.

6. The memorial print issuance system (1) according to claim 1 or 2, wherein the service is performance of a concert, play or the like or provision of facilities such as a hotel.

7. The memorial print issuance system (1) according to any of claims 1 to 6, wherein the user image input device is a camera (50) that takes an image of the user.

8. The memorial print issuance system (1) according to any of claims 1 to 7, wherein the user order information acquisition device (86) reads and acquires a part or all of the user order information from a ticket of the user on which predetermined information is recorded.

9. The memorial print issuance system (1) according to any of claims 1 to 7, wherein the user order information acquisition device (86) acquires a part or all of the user order information via a network (90).
